Europäisches Patentamt

(19) European Patent Office

Office européen des brevets

(11) Veröffentlichungsnummer: **0 060 240**
**B1**

(12) **EUROPÄISCHE PATENTSCHRIFT**

(45) Veröffentlichungstag der Patentschrift:
24.07.85

(51) Int. Cl.⁴: **A 43 B 13/04**

(21) Anmeldenummer: **82890034.0**

(22) Anmeldetag: **04.03.82**

(54) Schuhsohle, Verfahren zur Herstellung derselben und Form zur Durchführung des Verfahrens.

(30) Priorität: **05.03.81 AT 1028/81**

(43) Veröffentlichungstag der Anmeldung:
**15.09.82 Patentblatt 82/37**

(45) Bekanntmachung des Hinweises auf die Patenterteilung:
**24.07.85 Patentblatt 85/30**

(84) Benannte Vertragsstaaten:
**CH DE FR GB IT LI NL SE**

(56) Entgegenhaltungen:
**EP - A - 0 043 369**
**AU - B - 513 589**
**DE - U - 6 750 678**
**FR - A - 2 038 091**
**US - A - 2 532 638**

(73) Patentinhaber: **DISTROPAT AG, Gartenstrasse 2, CH-6300 Zug (CH)**

(72) Erfinder: **Ehrlich, Johann F., Jr., Roseggerstrasse 16/5, A-3500 Krems/Donau (AT)**

(74) Vertreter: **Boeckmann, Peter, Dipl.-Ing. et al, Patentanwälte Dipl.-Ing. Peter Boeckmann, Dipl.-Ing. Leo Brauneiss Strohgasse 10, A-1030 Wien (AT)**

**Beschreibung**

Die Erfindung betrifft eine Schuhsohle, welche zumindest teilweise aus geschäumtem Kunststoff bzw. Elastomeren, beispielsweise aus geschäumtem Polyurethan, Weich-PVC, Äthylen-Vinyl-Acetat oder thermoplastischem Kautschuk besteht, wobei in den Kunststoff Befestigungselemente für die Befestigung des Schuhoberteils eingebettet sind. Die Erfindung betrifft ferner ein Verfahren zur Herstellung einer solchen Schuhsohle.

Es ist bereits bekannt, Schuhsohlen aus Kunststoff, vorzugsweise aus geschäumtem Polyurethan, herzustellen, da diese Schuhsohlen den Fuss weich und elastisch abstützen und ein angenehmes Gefühl beim Gehen bewirken. Die Befestigung des Schuhoberteiles an solchen Schuhsohlen aus hartem geschäumtem Polyurethan erfolgte bisher durch Nageln, Schrauben oder Klammern, wobei der Schuhoberteil entweder seitlich an der Schuhsohle befestigt oder über die Schuhsohle gezwickt wurde. Bei der seitlichen Befestigung erfolgt häufig ein Ausreissen der Befestigungsorgane, so dass sich dann der Schuhoberteil von der Sohle ablöst. Bei einem gezwickten Oberteil ist diese Gefahr weniger gross, jedoch besteht hier der Nachteil, dass der Schuhoberteil die Seitenfläche der Sohle lose umgibt so dass Schmutz oder andere Verunreinigungen in den Zwischenraum zwischen der Sohlenseitenfläche und dem Schuhoberteil eindringen können und nicht nur das Tragegefühl erheblich beeinträchtigen, sondern auch zu einer Beschädigung führen und ein unschönes Aussehen des Schuhs bewirken können. Ausserdem wird durch das Zwicken der Bedarf an teurem Oberteilmaterial wesentlich vergrössert, da ja, wie bereits erwähnt, der Oberteil die Seitenfläche der Sohle umschlingt und an der Sohlenunterseite befestigt ist.

Bei Sohlen aus weichem Polyurethanschaum ist es bekannt, den Oberteil an der Sohle anzukleben. Diese Vorgangsweise ist sehr umständlich und teuer und es ist trotzdem eine einwandfreie Verbindung zwischen Sohle und Oberteil nicht gewährleistet.

Auf jeden Fall sind für die Befestigung des Schuhoberteils an der Sohle nach den bisher beschriebenen Methoden besondere Kenntnisse erforderlich, so dass diese Befestigung nur von gelernten teuren Facharbeitern vorgenommen werden kann.

Bei Sohlen, die aus einem hölzernen Vorderteil und einem hölzernen Hinterteil bestehen, die im Ballenbereich durch einen biegsamen Zwischenteil miteinander verbunden sind, ist es bereits bekannt, in diesem biegsamen Zwischenteil starre Befestigungselemente für die Befestigung des Schuhoberteils einzubetten. Derartige starre Befestigungselemente sind jedoch insbesondere für eine zur Gänze oder zum Grossteil aus Kunststoff bestehende Sohle nicht verwendbar, da sie den Biege- und Torsionsbeanspruchungen der Sohle nicht zu folgen vermögen und daher in ihrem Bereich zu einem Bruch der Sohle führen.

Die vorliegende Erfindung hat sich zur Aufgabe gestellt, die Nachteile der bekannten Schuhsohlen zu vermeiden und eine zumindest teilweise aus geschäumtem Kunststoff, vorzugsweise aus geschäumtem Polyurethan bestehende Schuhsohle zu schaffen, welche eine einfache und sichere Befestigung des Schuhoberteils ermöglicht, wobei eine Beschädigung der Schuhsohle vermieden wird. Die Erfindung geht hiebei aus von einer Schuhsohle der eingangs beschriebenen Art und besteht im wesentlichen darin, dass die Befestigungselemente von Spritzgussteilen aus ungeschäumtem Kunststoff gebildet sind. Derartige gespritzte Kunststoffteile sind einfach herzustellen, wobei es möglich ist, durch in diese gespritzten Kunststoffteile eingesetzte Stifte od. dgl. eine sichere Befestigung des Schuhoberteiles mit diesen gespritzten Kunststoffteilen und daher auch mit der Schuhsohle zu erhalten, wobei dadurch, dass die gespritzten Kunststoffteile eine gewisse Elastizität besitzen, diese Kunststoffteile den Bewegungen der Schuhsohle beim Gehen folgen können und nicht durch ihre Starrheit bei Verbiegungen oder Verwindungen der Schuhsohle ausreissen bzw. eine Beschädigung dieser Schuhsohle bewirken.

Gemäss einer bevorzugten Ausführungsform der Erfindung bestehen die Spritzgussteile aus einem Kunststoff, dessen mechanische und physikalische Eigenschaften ähnlich sind denjenigen des Sohlenmaterials, wenn es sich in einem ungeschäumten Zustand befindet, so dass sie diesem Sohlenmaterial hinsichtlich dessen Eigenschaften angepasst sind.

Damit die Spritzgussteile die erforderlichen Eigenschaften besitzen, bestehen die in ein geschäumtes Weich-Polyurethan eingebetteten Spritzgussteile aus weichen Polymeren wie spritzbarem Kautschuk mit einer Härte von 36 Shore A bis 98 Shore D und die in ein geschäumtes halbhartes Polyurethan eingebetteten Spritzgussteile aus spritzbaren härteren Polymeren wie z.B. Polyamid, mit einer Härte von 65 Shore A bis 88 Shore D. Bei Verwendung von weichem Polyurethanschaum werden somit auch weiche Spritzgusselemente verwendet, wogegen bei Verwendung von halbhartem Polyurethan auch die Spritzgusselemente härter sind.

In die Spritzgussteile werden, wie bereits angeführt, Stifte od. dgl. eingesetzt, welche das Schuhoberteilmaterial durchdringen, wodurch eine Verbindung des Schuhoberteiles mit der Sohle erfolgt. Um nun zu vermeiden, dass sich beim Einsetzen der Stifte die Lage der Spritzgussteile in der Sohle verändert, sind gemäss einem weiteren Merkmal der Erfindung diese Spritzgussteile mit Vorsprüngen od. dgl. zur Verankerung ausgebildet.

Insbesondere bei Verwendung von halbhartem geschäumtem Polyurethan als Sohlenmaterial ist es zweckmässig, wenn die Spritzgusselemente nicht mit dem Polyurethan fest verbunden sind, sondern sich etwas im Polyurethan bewegen können, damit sie dem Abrollvorgang des Fusses beim Gehen nicht hinderlich sind. Um zu verhindern, dass das Sohlenmaterial bei solchen geringfügigen Relativbewegungen zwischen Sohle und Spritzgussteilen eine Beschädigung erleidet, die in der späteren Folge zu einem Riss im Sohlenmaterial führen könnte, weisen gemäss einem weiteren Merkmal der Erfindung die Spritzgussteile einen abgerundeten, beispielsweise kreisrunden oder ovalen, Querschnitt auf. Durch die Vermeidung von Ecken werden örtliche Beanspruchungen des Sohlenmaterials verhindert, wie sie sonst im Bereich dieser Ecken auftreten würden, welche örtlichen Beanspruchungen insbesondere dann, wenn sie immer wieder auftreten, eine Zerstörung der Sohle zur Folge haben könnten.

Es ist möglich, dass an jeder Stelle, an welcher der Schuhoberteil an der Sohle befestigt werden soll, ein gesonderter Spritzgussteil in der Sohle vorgesehen ist. Eine solche Ausführungsform weist jedoch den Nachteil auf, dass das Einlegen der Spritzgussteile in die Form einen beträchtlichen Zeit- und Arbeitsaufwand benötigt und daher der Ausstoss pro Form gering ist. Ausserdem besteht insbesondere bei Verwendung von weichem Polyurethanschaum als Sohlenmaterial die Gefahr, dass die Spritzgussteile ausreissen. Um diese Nachteile zu beseitigen, weisen gemäss einer bevorzugten Ausführungsform der Erfindung die Spritzgussteile entweder im Bereich der Sohlenseitenwände angeordnete Hülsen auf, wobei zumindest axial gegenüberliegende Hülsen durch einen Längssteg miteinander verbunden sind, oder die Spritzgussteile weisen über die ganze Sohlenbreite durchgehende Röhrchen auf. Bei diesen Ausführungsformen wird nicht nur der Vorteil erzielt, dass die Spritzgussteile für zumindest zwei einander gegenüberliegende Befestigungsstellen des Oberteils gemeinsam in die Form eingelegt werden können, es wird auch ein Verschieben der Spritzgussteile innerhalb der Sohle in axialer Richtung durch den montierten Schuhoberteil verhindert. Wenn die Spritzgussteile über die ganze Sohlenbreite durchgehende Röhrchen aufweisen, so kann der Schuhoberteil gleichsam an die Sohle angenäht werden, denn in einem solchen Fall kann das Nähmaterial durch das Röhrchen von einer Sohlenseitenfläche zur gegenüberliegenden hindurchgezogen werden. Der Schuhoberteil weist dann im Befestigungsbereich an der Sohle eine Art Naht auf, wodurch ein dekorativer Effekt entsteht.

Besonders vorteilhaft ist es, wenn die Längsstege und/ oder die über diese Längsstege verbundenen Hülsen bzw. die über die ganze Sohlenbreite durchgehenden Röhrchen durch Querstege zu einem Gitter vereinigt sind. Eine solche Ausführung weist zahlreiche Vorteile auf. So kann das Einlegen der Spritzgussteile für sämtliche Befestigungsstellen des Schuhoberteils an der Sohle mit einem einzigen Handgriff in die Form vorgenommen werden, da alle Spritzgussteile miteinander über das Gitter verbunden sind. Dadurch erfolgt eine wesentliche Zeit- und Arbeitseinsparung und es wird der Ausstoss der mit einer Form hergestellten Sohle vergrössert. Ausserdem erfolgt eine gegenseitige Verankerung der einzelnen Befestigungsstellen über das Gitter, so das partielle Spitzenbelastungen vom Gitter aufgenommen werden, ohne dass eine Beschädigung der Sohle erfolgt. Insbesondere bei dünner Sohle wird durch die Gitterstruktur ein Ausreissen der Spritzgussteile verhindert. Die gitterartige Ausbildung ermöglicht es, billigere Schäume mit niedrigerer spezifischer Dichte zu verwenden, wodurch nicht nur die Kosten gesenkt werden, sondern auch das Gewicht der Sohle und damit des Schuhs in erwünschter Weise verringert wird, wobei dennoch eine sichere Verankerung des Schuhoberteils an der Sohle gewährleistet ist.

Die Stege weisen zweckmässig einen geringeren Querschnitt auf als die Hülsen bzw. Röhrchen, so dass einerseits eine sichere Befestigung des Schuhoberteiles an den Hülsen bzw. Röhrchen gewährleistet ist, anderseits das Gitter die erforderliche Flexibilität aufweist, damit es den Biegebeanspruchungen der Sohle beim Gehen zu folgen vermag.

Besonders vorteilhaft ist es, wenn die Spritzgussteile geringfügig aus der Sohlenseitenfläche herausragen. Dadurch wird nicht nur eine leichte Verankerung der Spritzgussteile in der Form ermöglicht, wie dies im folgenden noch näher erläutert werden wird, sondern es wird auch die Vorgangsweise bei der Befestigung des Schuhoberteils vereinfacht. So wird bei dieser Ausbildung verhindert, dass beim Formen der Sohle Polyurethan in die Öffnungen der Spritzgussteile eindringt und diese zugesetzt werden, gegebenenfalls sogar unsichtbar werden, und erst freigelegt werden müssen, um die Stifte od. dgl. zur Befestigung des Schuhoberteils einsetzen zu können oder das Nahtmaterial hindurchführen zu können. Es wird aber auch durch diese herausragenden Enden der Spritzgussteile eine zusätzliche Verankerung des Schuhoberteils erzielt. In diesem Schuhoberteil müssen ohnedies Löcher für das Hindurchstecken der Stifte od. dgl., gegebenenfalls für das Hindurchführen des Nahtmaterials, gestanzt werden. Es können nun diese Löcher so gross gemacht werden, dass die herausragenden Enden der Spritzgussteile teilweise von diesen Löchern aufgenommen werden. Dadurch erfolgt eine zusätzliche Befestigung des Schuhoberteiles an den herausragenden Enden der Spritzgussteile. Ausserdem wird die Montage des Schuhoberteiles dadurch erleichtert, dass dieser Schuhoberteil schon nach dem Aufschieben auf die herausragenden Enden der Spritzgussteile so weit an der Sohle fixiert ist, dass dann die Stifte od. dgl. bzw. das Nahtmaterial leicht eingesetzt werden kann.

An der Unterseite des Gitters sind zweckmässig von diesem abstehende Zäpfchen vorgesehen, wodurch bei der Herstellung der Sohle der erforderliche Abstand der Spritzgussteile von der Sohlenoberfläche gewährleistet ist.

Vorzugsweise sind in den Hülsen bzw. Röhrchen Stifte od. dgl. eingesetzt, deren Durchmesser dem Innendurchmesser der Hülsen oder Röhrchen entspricht oder diesen nur geringfügig überschreitet. Dadurch wird sichergestellt, dass beim Einsetzen der Stifte diese zwar in den Hülsen oder Röhrchen gut verankert sind, jedoch keine wesentliche Materialverdrängung in den Spritzgussteilen erfolgt, wodurch diese und in der Folge auch die Sohle beschädigt werden könnten. Beispielsweise können die Stifte mit einem Schraubgewinde versehen sein, das in ein Innengewinde der Hülsen oder Röhrchen eingeschraubt ist. Es ist aber auch möglich, die Stifte od. dgl. mit Widerhaken zu versehen, die mit Vorsprüngen im Inneren der Hülsen oder Röhrchen zusammenwirken. Während im ersten Fall zum Einsetzen der Stifte od. dgl. eine Drehbewegung erforderlich ist, genügt es im zweiten Fall, die Stifte in die Öffnungen der Hülsen oder Röhrchen hineinzudrücken. In einem solchen Fall können zumindest einige der Stifte od. dgl. an ihrem Kopfende über eine flexible Leiste miteinander verbunden sein, wodurch ein gleichzeitiges Einsetzen aller dieser über die Leiste miteinander verbundenen Stifte möglich ist. Ausserdem verleiht die Leiste dem Schuh ein dekoratives Aussehen.

Die Stifte od. dgl. können aus Metall bestehen, jedoch ist dies nachteilig, weil in diesem Fall die Stifte od. dgl. nicht flexibel sind und den Bewegungen der Spritzgussteile zu folgen vermögen. Ausserdem besteht die Gefahr eines Oxydierens, wodurch das Aussehen des fertigen Schuhs beeinträchtigt wird. Es ist daher von Vorteil, wenn die Stifte aus vorzugsweise durchgefärbtem Kunststoff bestehen, so dass sie gleichfalls eine gewisse Flexibilität besitzen. Ausserdem können die Stifte an in einer zum Sohlenmaterial passenden Farbe hergestellt werden, wobei bei durchgefärbten Stiften diese Farbe auch bei Beschädigungen der Oberfläche, beispielsweise des Kopfes der Stifte, erhalten bleibt.

Das erfindungsgemässe Verfahren zur Herstellung einer erfindungsgemässen Schuhsohle ist im wesentlichen dadurch gekennzeichnet, dass die Spritzgussteile sowie gegebenenfalls weitere Sohlenbestandteile in eine Form eingelegt werden, dass anschliessend schäumbares Kunststoffmaterial in die Form eingegossen oder eingespritzt wird und dass nach dem Aushärten des Kunststoffes die Sohle ausgeformt wird. Der Herstellungsvorgang einer erfindungsgemässen Sohle ist somit äusserst einfach und ohne wesentlichen zusätzlichen Arbeitsaufwand möglich.

Wie bereits erwähnt, ist es insbesondere bei Verwendung von halbhartem geschäumtem Polyurethan als Sohlenmaterial zweckmässig, wenn die Spritzgusselemente nicht mit dem Polyurethan verbunden sind, sondern sich in geringem Masse relativ zum Sohlenmaterial bewegen können, damit sie beim Abbiegen der Sohle keine Beschädigung derselben hervorrufen. Um eine Verbindung der Spritzgussteile mit dem Sohlenmaterial zu verhindern, ist es zweckmässig, Polyamid als Material für die Spritzgussteile zu verwenden, welches mit dem Polyurethan keine chemische Verbindung eingeht. Weiters können die Spritzgussteile vor dem Einlegen in die Form mit einem Trennmittel behandelt werden, welches gleichfalls eine Verbindung mit dem Polyurethan unterbindet.

Die Form zur Durchführung des erfindungsgemässen Verfahrens ist im wesentlichen dadurch gekennzeichnet, dass sie im Bereich der Sohlenseitenfläche geteilt ist und dass in wenigstens einer Formhälfte entlang der Teilungsfuge Ausnehmungen zur Aufnahme der freien Enden der Spritzgussteile vorgesehen sind. Dadurch lassen sich die Spritzgussteile auf einfache Weise in der Form fixieren und in ihrer richtigen Lage halten, ohne dass hiefür beispielsweise Stifte erforderlich sind, die in der Form verankert sind, für die Fixierung der Spritzgussteile in Öffnungen derselben eingesetzt werden müssen und beim Entformen der Sohle gesondert zurückgezogen werden müssen. Die in den Ausnehmungen der Form abgestützten Bereiche der freien Enden der Spritzgussteile ragen dann in der bereits erwähnten vorteilhaften Weise nach dem Entformen aus der Sohlenseitenfläche heraus.

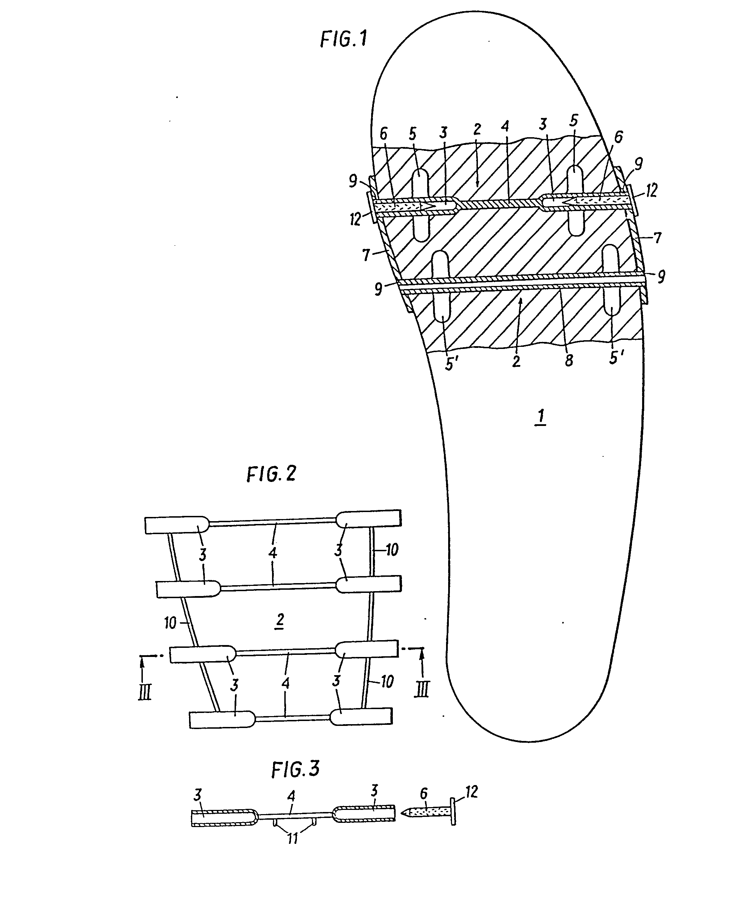

In der Zeichnung ist die Erfindung anhand von Ausführungsbeispielen schematisch veranschaulicht. Fig. 1 zeigt eine erfindungsgemäss ausgebildete Sohle in einem Schnitt in der Ebene parallel zur Sohlenlauffläche, wobei zwei verschieden ausgebildete Spritzgussteile in dieser Sohle vorgesehen sind. Fig. 2 stellt die Spritzgussteile in ihrer bevorzugten Ausführungsform dar, in welcher ein Gitter gebildet wird, und Fig. 3 zeigt einen Schnitt nach der Linie III–III in Fig. 1 zusammen mit einem Stift.

Die in Fig. 1 dargestellte Sohle 1 ist für eine Sandale gedacht, bei welcher der Schuhoberteil lediglich aus einer Schlaufe besteht. Es sind daher bei dieser Sohle 1 nur im Ballenbereich zwei Spritzgussteile 2 aus Kunststoff dargestellt. In der Regel werden jedoch auch dann, wenn nur eine Schlaufe den Schuhoberteil bildet, mehr als zwei solcher Spritzgussteile, beispielsweise drei oder vier Spritzgussteile vorgesehen sein.

In Fig. 1 ist ferner eine Ausführungsform gezeigt, bei welcher lediglich zwei einander gegenüberliegende Befestigungsstellen für den Schuhoberteil einen gemeinsamen Spritzgussteil bilden. Der in Fig. 2 oben dargestellte Spritzgussteil 2 besteht aus zwei Hülsen 3, die über einen Längssteg 4 miteinander verbunden sind, der einen geringeren Querschnitt als die Hülsen aufweist. Ferner ist dieser Spritzgussteil mit Vorsprüngen 5 versehen, über welche die Lage des Spritzgussteiles in der Sohle fixiert wird. In die Hülsen 3 können Stifte 6 in der noch näher beschriebenen Weise eingesetzt werden, durch welche der Oberteil 7 gehalten wird.

Der in Fig. 1 unten dargestellte Spritzgussteil 2 besteht aus einem über die ganze Sohlenbreite durchlaufenden Röhrchen 8, das mit flügelartigen Vorsprüngen 5′ versehen ist. In dieses Röhrchen können beidseitig gleichfalls Stifte 6 zur Fixierung des Schuhoberteils 7 eingesetzt werden, es kann aber auch durch dieses Röhrchen ein Nahtmaterial hindurchgezogen werden, welches zur Fixierung des Schuhoberteiles verwendet wird. Die Befestigung des Schuhoberteiles 7 an der Sohle 1 erhält dann ein nahtartiges dekoratives Aussehen.

Wie aus der Zeichnung ersichtlich ist, stehen die freien Enden sowohl der Hülsen 3 als auch des Röhrchens 8 so weit über die Sohlenseitenfläche vor, dass diese Enden in entsprechend grosse Öffnungen des Schuhoberteiles 7 eindringen. Dadurch erfolgt eine zusätzliche Fixierung des Schuhoberteiles 7 und es wird die Montage desselben erleichtert, da durch das Aufschieben desselben auf die herausragenden freien Enden 9 der Spritzgussteile 2 bereits eine Vorfixierung des Schuhoberteiles 7 bewirkt wird.

Die bevorzugte Ausführungsform ist in den Fig. 2 und 3 dargestellt, wo lediglich ein Spritzgussteil gezeigt ist, wie er in die Form eingesetzt wird. Wie ersichtlich, sind hier nicht nur gegenüberliegende Hülsen 3 durch Längsstege 4 miteinander verbunden, sondern auch durch Querstege 10, so dass ein Gitter gebildet wird, welches als Ganzes in die Form eingelegt werden kann. Die Anzahl der Hülsen 3 entspricht der Anzahl der erforderlichen Befestigungsstellen des Schuhoberteils 7 an der Sohle 1. Das Einlegen des Gitters in die Form erfolgt derart, dass die freien Enden 9 der Hülsen 3, welche dann von der Sohlenseitenfläche abstehen, in Ausnehmungen der Form eingelegt werden, welche sich im Bereich der Trennfuge der zweigeteilten Form befinden. Dadurch wird eine sichere Fixierung des Gitters in der Form ohne zusätzliche Massnahmen bewerkstelligt. Der erforderliche Abstand des Gitters vom Formboden wird durch von der Unterseite des Gitters abstehende Zäpfchen 11 (siehe Fig. 3) sichergestellt, die am Formboden aufruhen. Zusätzlich zu den die Hülsen 3 miteinander verbindenden Querstege 10 oder anstelle dieser Querstege 10 können die Längsstege 4 miteinander verbindende Querstege vorgesehen sein.

Selbstverständlich können auch bei der gitterartigen Ausführung entsprechend Fig. 2 anstelle der Hülsen 3 Röhrchen 8 vorgesehen sein, welche dann auch die Längsstege 4 ersetzen und über die Querstege miteinander verbunden sind.

Die Stifte 6 weisen einen Kopf 12 auf, der ein entsprechend geformtes dekoratives Aussehen besitzt. Diese Stifte 6 sind vorzugsweise aus durchgefärbtem Kunststoff hergestellt und besitzen entweder ein Schraubgewinde, mit welchem sie in ein entsprechendes Gewinde der Hülsen 3 einschraubbar sind, oder sie sind mit Widerhaken versehen, die mit Vorsprüngen im Inneren der Hülse 3 zusammenwirken. Es können auch mehrere Stifte 6 durch eine Leiste, welche anstelle der Köpfe 12 dieser Stifte angeordnet ist, miteinander verbunden sein.

Bei der Herstellung einer erfindungsgemässen Sohle wird zunächst das in den Fig. 2 und 3 dargestellte Gitter in der erwähnten Weise in die Form eingelegt. Anschliessend wird entweder vor oder nach dem Schliessen der Form polyurethanbildendes Material in die Form eingegossen oder eingespritzt und in der Form zur Bildung der Sohle 1 aushärten gelassen. Schliesslich wird die Form geöffnet und die mit den Spritzgussteilen 2 versehene Sohle 1 ausgeformt.

Die Spritzgussteile 2 aus Kunststoff weisen mechanische und physikalische Eigenschaften auf, die den entsprechenden Eigenschaften der Sohle 1 aus geschäumtem Polyurethan angepasst sind, so dass sie einerseits die Bewegungen dieser Sohle 1 beim Gehen mitmachen, ohne dass eine Zerstörung der Sohle an der Einlegestelle der Spritzgussteile erfolgt, anderseits eine sichere Verankerung des Schuhoberteiles in der Sohle gewährleisten.

Bei Verwendung von halbhartem geschäumtem Polyurethan als Sohlenmaterial ist eine feste Verbindung zwischen dem Sohlenmaterial und den Spritzgussteilen nicht erwünscht, damit diese besser den Bewegungen der Sohle beim Gehen folgen können. In einem solchen Fall ist es zweckmässig, als Material für die Spritzgussteile Polyamid zu verwenden, welches mit dem Polyurethan keine feste Verbidung eingeht.

**Patentansprüche**

1. Schuhsohle, welche zumindest teilweise aus geschäumtem Kunststoff bzw. Elastomeren, beispielsweise aus geschäumtem Polyurethan, Weich-PVC, Äthylen-Vinyl-Acetat oder thermoplastischem Kautschuk besteht, wobei in den Kunststoff Befestigungselemente für die Befestigung des Schuhoberteils eingebettet sind, dadurch gekennzeichnet, dass die Befestigungselemente von Spritzgussteilen (2) aus ungeschäumtem Kunststoff gebildet sind.

2. Schuhsohle nach Anspruch 1, dadurch gekennzeichnet, dass die Spritzgussteile (2) aus einem Kunststoff bestehen, dessen mechanische und physikalische Eigenschaften ähnlich sind denjenigen des Sohlenmaterials, wenn es sich in einem ungeschäumten Zustand befindet.

3. Schuhsohle nach Anspruch 1 oder 2, dadurch gekennzeichnet, dass die in ein geschäumtes Weich-Polyurethan eingebetteten Spritzgussteile (2) aus weichen Polymeren bzw. Elastomeren wie spritzbarem Kautschuk mit einer Härte von 36 Shore A bis 98 Shore D bestehen.

4. Sohle nach Anspruch 1 oder 2, dadurch gekennzeichnet, dass die in ein geschäumtes halbhartes Polyurethan eingebetteten Spritzgussteile (2) aus spritzbaren härteren Polymeren bzw. Elastomeren, wie z.B. Polyamid, mit einer Härte von 65 Shore A bis 88 Shore D bestehen.

5. Schuhsohle nach einem der Ansprüche 1 bis 4, dadurch gekennzeichnet, dass die Spritzgussteile (2) mit Vorsprüngen (4) od. dgl. zur Verankerung ausgebildet sind.

6. Sohle nach einem der Ansprüche 1 bis 5, dadurch gekennzeichnet, dass die Spritzgussteile (2) einen abgerundeten, beispielsweise kreisrunden oder ovalen, Querschnitt aufweisen.

7. Sohle nach einem der Ansprüche 1 bis 6, dadurch gekennzeichnet, dass die Spritzgussteile (2) im Bereich der Sohlenseitenwände angeordnete Hülsen (3) aufweisen, wobei zumindest axial gegenüberliegende Hülsen (3) durch einen Längssteg (4) miteinander verbunden sind.

8. Sohle nach einem der Ansprüche 1 bis 6, dadurch gekennzeichnet, dass die Spritzgussteile (2) über die ganze Sohlenbreite durchgehende Röhrchen (8) aufweisen.

9. Sohle nach einem der Ansprüche 1 bis 8, dadurch gekennzeichnet, dass die Längsstege (4) und/oder die über diese Längsstege miteinander verbundenen Hülsen (3) bzw. die über die ganze Sohlenbreite durchgehenden Röhrchen (8) durch Querstege (10) zu einem Gitter vereinigt sind.

10. Sohle nach einem der Ansprüche 1 bis 9, dadurch gekennzeichnet, dass die Stege (4,10) einen geringeren Querschnitt als die Hülsen (3) bzw. Röhrchen (8) aufweisen.

11. Sohle nach einem der Ansprüche 1 bis 10, dadurch gekennzeichnet, dass die Spritzgussteile (2) geringfügig aus der Sohlenseitenfläche herausragen.

12. Sohle nach einem der Ansprüche 1 bis 11, dadurch gekennzeichnet, dass an der Unterseite des Gitters von diesem abstehende Zäpfchen (11) vorgesehen sind.

13. Sohle nach einem der Ansprüche 1 bis 12, dadurch gekennzeichnet, dass in den Hülsen (3) bzw. Röhrchen (8) Stifte (6) od. dgl. eingesetzt sind, deren Durchmesser dem Innendurchmesser der Hülsen (3) bzw. Röhrchen (8) entspricht oder diesen nur geringfügig überschreitet.

14. Sohle nach Anspruch 13, dadurch gekennzeichnet, dass die Stifte od. dgl. (6) mit einem Schraubgewinde versehen sind, das in ein Innengewinde der Hülsen (3) oder Röhrchen (8) eingeschraubt ist.

15. Sohle nach Anspruch 13, dadurch gekennzeichnet, dass die Stifte od. dgl. (6) mit Widerhaken versehen sind, die mit Vorsprüngen im Inneren der Hülsen (3) bzw. Röhrchen (8) zusammenwirken.

16. Sohle nach Anspruch 13 oder 15, dadurch gekennzeichnet, dass zumindest einige der Stifte od. dgl. (6) an ihrem Kopfende über eine flexible Leiste miteinander verbunden sind.

17. Sohle nach einem der Ansprüche 13 bis 15, dadurch gekennzeichnet, dass die Stifte od. dgl. (6) aus, vorzugsweise durchgefärbtem, Kunststoff bestehen.

18. Verfahren zur Herstellung einer Schuhsohle nach einem der Ansprüche 1 bis 17, dadurch gekennzeichnet, dass die Spritzgussteile sowie gegebenenfalls weitere Sohlenbestandteile in eine Form eingelegt werden, dass anschliessend vor oder nach dem Schliessen der Form schäumbares Kunststoffmaterial in die Form eingegossen oder eingespritzt wird und dass nach dem Aushärten des Kunststoffes die Sohle ausgeformt wird.

19. Verfahren nach Anspruch 18, dadurch gekennzeichnet, dass die Spritzgussteile vor dem Einlegen in die Form mit einem Trennmittel behandelt werden.

20. Form zur Durchführung des Verfahrens nach Anspruch 18, dadurch gekennzeichnet, dass sie im Bereich der Sohlenseitenfläche geteilt ist und dass in wenigstens einer Formhälfte entlang der Teilungsfuge Ausnehmungen zur Aufnahme der freien Enden der Spritzgussteile vorgesehen sind.

## Claims

1. Shoe-sole consisting at least partially of foamed plastic material and elastomeres, respectively, for example of foamed polyurethane, soft-PVC, ethylene-viniyl-acetate or thermoplastic caoutchouc, fastening elements for fastening the upper of the shoe being embedded into the plastic material, characterized in that the fastening elements are formed by sprayed die castings (2) of unfoamed plastic material.

2. Shoe-sole according to claim 1, characterized in that the sprayed die castings (2) consist of a plastic material, the mechanical and physical properties thereof are similar to those of the sole material when it is in an unfoamed state.

3. Shoe-sole according to claim 1 or 2, characterized in that the sprayed die castings (2) embedded into a foamed soft polyurethane consist of soft polymeres and elastomeres, respectively, for example injectable caoutchouc having a hardness of 36 shore A to 98 shore D.

4. Sole according to claim 1 or 2, characterized in that the sprayed die castings (2) embedded into a foamed semihard polyurethane consist of injectable harder polymeres and elastomeres, respectively, for example polyamide, having a hardness of 65 shore A to 88 shore D.

5. Shoe-sole according to any of claims 1 to 4, characterized in that the sprayed die castings (2) are provided with projections (4) or the like for anchoring.

6. Sole according to any of claims 1 to 5, characterized in that the sprayed die castings (2) have a rounded cross-section, for example a circular or oval-shaped cross-section.

7. Sole according to any of claims 1 to 6, characterized in that the sprayed die castings (2) comprise sockets (3) arranged within the range of the lateral walls of the sole, at least axially opposing sockets (3) being connected to each other by a longitudinal strap (4).

8. Sole according to any of claims 1 to 6, characterized in that the sprayed die castings (2) comprise small tubes (8) extending over the total width of the sole.

9. Sole according to any of claims 1 to 8, characterized in that the longitudinal straps (4) and/or the sockets (3) are connected to each other by these longitudinal straps, and the small tubes (8) extending over the whole width of the sole, respectively are joined to a grating by transversed straps(10).

10. Sole according to any of claims 1 to 9, characterized in that the straps (4,10) have a smaller cross-section than the sockets (3) and the small tubes (8), respectively.

11. Sole according to any of claims 1 to 10, characterized in that the sprayed die castings (2) project by a small amount from the lateral surface of the sole.

12. Sole according to any of claims 1 to 11, characterized in that small studs (11) are provided on the bottom side of the grating and projecting from it.

13. Sole according to any of claims 1 to 12, characterized in that pins (6) or the like are inserted into the sockets (3) or the small tubes (8), respectively, the diameter of the pins (6) corresponds to the inner diameter of the sockets (3) or the small tubes (8), respectively, or exceeds the same only by a small amount.

14. Sole according to claim 13, characterized in that the pins or the like (6) are provided with screw threads screwed into internal threads of the sockets (3) or of the small tubes (8).

15. Sole according to claim 13, characterized in that the pins or the like (6) are provided with barbs cooperating with projections in the interior of the sockets (3) or small tubes (8), respectively.

16. Sole according to claim 13 or 15, characterized in that at least some of the pins or the like (6) are connected at their head ends to each other by means of a flexible ledge.

17. Sole according to any of claims 13 to 15, characterized in that the pins or the like (6) consist of a plastic material, preferably of a plastic material being dyed through.

18. Method for producing a shoe-sole according to any of claims 1 to 17, characterized in that the sprayed die castings and, if desired, further sole elements are put into a mould, that then before or after closing the mould foamable plastic material is poured or injected into the mould and that the sole is released from the mould after solidifying of the plastic material.

19. Method according to claim 18, characterized in that the sprayed die castings are treated with a parting agent before their insertion into the mould.

20. Mould for carrying out the method according to claim 18, characterized in that it is divided in the region of the lateral surface of the sole and that in at least one half of the mould recesses are provided along the separating seam for receiving the free ends of the sprayed die castings.


**Revendications**

1. Semelle de chaussure, qui est constituée au moins partiellement de mousse de matière plastique ou d'élastomère, par exemple de mousse de polyuréthane, de PVC souple, d'acétate de vinyle-éthylène ou de caoutchouc thermoplastique, des éléments de fixation étant noyés dans la matière plastique pour la fixation de l'empeigne de la chaussure, caractérisée en ce que les éléments de fixation sont formés par des pièces moulées par injection (2) en matière plastique non expansée.

2. Semelle de chaussure selon la revendication 1, caractérisée en ce que les pièces moulées par injection (2) sont constituées d'une matière plastique dont les propriétés mécaniques et physiques sont analogues à celles de la matière constitutive de la semelle lorsqu'elle se trouve à l'état non expansé.

3. Semelle de chaussure selon la revendication 1 ou 2, caractérisée en ce que les pièces moulées par injection (2) noyées dans une mousse de polyuréthane souple sont constituées d'un polymère ou élastomère souple tel que du caoutchouc injectable, ayant une dureté allant de 36 Shore A à 98 Shore D.

4. Semelle selon la revendication 1 ou 2, caractérisée en ce que les pièces moulées par injection (2) noyées dans une mousse de polyuréthane sémi-dure sont constituées de polymère ou élastomère injectable plus dur, comme par exemple un polyamide, ayant une dureté allant de 65 Shore A à 88 Shore D.

5. Semelle de chaussure selon l'une des revendications 1 à 4, caractérisée en ce que les pièces moulées par injection (2) sont munies de saillies (4) ou analogues en vue de leur ancrage.

6. Semelle selon l'une des revendications 1 à 5, caractérisée en ce que les pièces moulées par injection (2) présentent une section transversale arrondie, par exemple circulaire ou ovale.

7. Semelle selon l'une des revendications 1 à 6, caractérisée en ce que les pièces moulées par injection (2) comprennent des manchons (3) disposés dans la zone des parois latérales de la semelle, au moins des manchons (3) disposés axialement l'un en regard de l'autre étant reliés entre eux par une barrette longitudinale (4).

8. Semelle selon l'une des revendications 1 à 6, caractérisée en ce que les pièces moulées par injection (2) comprennent de petits tubes (8) s'étendant sur toute la largeur de la semelle.

9. Semelle selon l'une des revendications 1 à 8, caractérisée en ce que les barrettes longitudinales (4) et/ou les manchons (3) reliés entre eux par ces barrettes longitudinales ou les petits tubes (8) s'étendant sur toute la largeur de la semelle sont réunis par des tiges transversales (10) de manière à former une grille.

10. Semelle selon l'une des revendications 1 à 9, caractérisées en ce que les barrettes et tiges (4,10) présentent une section transversale plus faible que les manchons (3) ou petits tubes (8).

11. Semelle selon l'une des revendications 1 à 10, caractérisée en ce que les pièces moulées par injection (2) font légèrement saillie hors de la surface latérale de la semelle.

12. Semelle selon l'une des revendications 1 à 11, caractérisée en ce qu'il est prévu, sur le côté inférieur de la grille des tétons (11) s'écartant de celle-ci.

13. Semelle selon l'une des revendications 1 à 12, caractérisées en ce que dans les manchons (3) ou les petits tubes (8) sont engagées des chevilles (6) ou analogues dont le diamètre correspond au diamètre interne de ces manchons (3) ou petits tubes (8) ou ne l'excède que de peu.

14. Semelle selon la revendication 13, caractérisée en ce que les chevilles ou analogues (6) sont munies d'un filet de vis qui se visse dans un filetage interne des manchons (3) ou petits tubes (8).

15. Semelle selon la revendication 13, caractérisée en ce que les chevilles ou analogues (6) sont munies de barbes qui coopèrent avec des saillies prévues à l'intérieur des manchons (3) ou petits tubes (8).

16. Semelle selon la revendication 13 ou 15, caractérisée en ce qu'au moins certaines des chevilles ou analogues (6) sont reliées entre elles par une baguette flexible, à leur extrémité de tête.

17. Semelle selon l'une des revendications 13 à 15, caractérisée en ce que les chevilles ou analogues (6) sont constituées de matière plastique, de préférence colorée dans la masse.

18. Procédé de fabrication d'une semelle de chaussure selon l'une des revendications 1 à 17, caractérisé en ce qu'on met en place dans un moule les pièces moulées par injection, ainsi qu' éventuellement d'autres parties constitutives de la semelle, en ce qu'on introduit ensuite dans le moule, par coulée ou par injection, de la matière plastique expansible, avant ou après la fermeture du moule, et en ce qu'on démoule la semelle après le durcissement de cette matière plastique.

19. Procédé selon la revendication 18, caractérisé en ce qu'avant leur mise en place dans le moule, on traite les pièces moulées par injection à l'aide d'un agent de démoulage.

20. Moule pour la mise en œuvre du procédé selon la revendication 18, caractérisé en ce qu'il est subdivisé au niveau de la surface latérale de la semelle et en ce qu'il est prévu, dans au moins une moitié de ce moule et le long de son joint, des logements destinés à recevoir les extrémités libres des pièces moulées par injection.

**FIG.1**

**FIG.2**

**FIG.3**